# EUROPEAN PATENT SPECIFICATION

(11) **EP 1 376 288 B1**
(45) Date of publication and mention of the grant of the patent: **13.09.2006**
(21) Application number: 03380035.0
(22) Date of filing: 20.02.2003
(51) Int. Cl.: G05D 16/20

(54) **Differential pressure electromagnetic valve**
Electromagnetisches Differenzdruckregelventil
Electrovanne de régulation de pression différentielle

(30) Priority: 21.03.2002 DE 2024532 U
(43) Date of publication of application: 02.01.2004
(73) Proprietor: Geyser Gastech S.A., 20570 Bergara (Gipuzkoa) (ES)
(72) Inventor: Otaegi Mendia, Jon, 20570 Bergara (Gipuzkoa) (ES); Lopez Cortés, Enrique, 20570 Bergara (Gipuzkoa) (ES); Huang, Chun-Chen, Sanchung (Taipeh) (TW)

(56) References cited:
- WO-A-00/36482
- DE-A- 1 909 873

## Description

### TECHNICAL FIELD

The present invention relates to electromagnetic valves, and more specifically to differential pressure electromagnetic valves.

### BACKGROUND OF THE INVENTION

Figure 6 shows a differential pressure electromagnetic valve of the prior art represented by DE-20105070-U1 comprising a valve body A that comprises an upper part A1 and a lower part A2. On one side of the lower part A2 there is an axial opening A21 adjacent to a gas channel A22 connected by a seal to a gas pipe B with a gas output port B2, where it is possible for the main plug component A3 to seal the gas output port B2 hermetically. A membrane A4 divides the interior of the valve body A into a first pressure chamber R1 and a second pressure chamber R2. The membrane A4 has a magnetic valve A5 which, on the side facing the second pressure chamber R2, has an input A51 and an output A52, the input A51 being linked to the gas output port B2 through the perforation A32 of the valve rocker A31, while the output A52 is linked to the gas input port B1. The magnetic valve A5 also has, between the input A51 and the output A52, a magnet A6 with a plug component A62 to open and close the output A52 that, in normal conditions is open, and a plug component A61 to open and close the input A51 that, in normal conditions, is closed. With the end of less diameter A33, the valve rocker A31 crosses the main plug component A3 and, with the other end, the axial opening A21 of the body of the valve A joined to the magnetic valve A5 of the membrane A4. Between the axial opening A21 and the main plug component A3, there is a main spring A34 that presses the main plug component A3 against the gas output port B2.

With the magnetic valve A5 inside the valve body A deenergised, the plug component A61, which in normal conditions is closed, seals the input A51 on one of the sides of the magnet A6 in the second pressure chamber R2 of the valve body A as a consequence of a small spring A63, so that the plug component A62 on the other side of the magnet A6 that, in normal conditions, is open, rocks and moves away from the output A52. In this way, the gas entering through the gas input port B1 and the gas channel A22 in the first pressure chamber R1 of the valve body A can flow through the output A52 to the second pressure chamber R2, so that the pressure in the first pressure chamber R1 and the second pressure chamber R2 is maintained in equilibrium. The membrane A4, through the main spring A34, presses against the main plug component A3 and, therefore, closes the gas output port B2, so that the gas cannot exit.

When the magnetic valve A5 of the valve body A is energised, the magnet A6 is attracted in the second pressure chamber R2, so that the plug component A61, normally closed, moves away from the input A51, so opening input A51. The plug component A62, normally open, rocks and blocks the output A52, so that the gas is unable to enter the second pressure chamber R2. The gas in the second pressure chamber R2 exits through the input A51, the valve rocker A31 and the gas output port B2. As a consequence, the pressure registered in the first pressure chamber R1 is greater than that in the second pressure chamber R2, so that the membrane A4 is pressed against the second pressure chamber R2, dragging the main plug component A3, which separates from the gas output port B2. As a consequence, the gas from the gas input port B1 can exit directly through the gas output port B2.

As it is necessary to connect a gas pipe B with the gas input port B1 and the gas output port B2 to the gas channel A22 in the lower part A2, the construction of this differential pressure electromagnetic valve is complicated. At the same time, machining costs are increased, in order to attain high-precision machining and to guarantee the hermetic seal. On the other hand, the location of the magnetic valve on the membrane may be detrimental to its movement.

The document WO-A-0036482 which represents the closest prior art, discloses the combination recited in the preamble of claim 1.

### DESCRIPTION OF THE INVENTION

A first object of the invention is to provide a differential pressure electromagnetic valve in which the first pressure chamber has, in the lower part of the valve body, a gas output port and a gas input port, the gas output port being opened and closed directly by means of the valve rocker, so that the gas flows only through the lower part, thereby simplifying the construction, reducing the cost of machining, and improving the hermetic seal.

A second object of the invention is to provide a differential pressure electromagnetic valve in which the magnetic valve is installed on one side of the upper part so that the membrane is able to move more easily.

A third object of the invention is to provide a differential pressure electromagnetic valve in which the gas output port has a stepping, while a gas flow regulation rod extends along the valve rocker. The front end of the gas flow regulation rod has an additional plug component which can be introduced into the stepping and which, on its perimeter, has also a stepping, while the rear end of the gas flow regulation rod emerges from the upper part of the valve body and is connected to a rotary button which can be used to adjust the depth of the additional plug component in the stepping of the gas output port, thus making it possible to regulate the gas flow thanks to the joint action of the stepping of the additional plug component and the stepping of the gas output port.

A fourth object of the invention is to provide a differential pressure electromagnetic valve in which, between the magnetic valve output and the second gas channel, there is a retention valve, intended to reduce the variation in pressure in the second pressure chamber.

A fifth object of the invention is to provide a differential pressure electromagnetic valve in which, in the second gas channel, there is a needle valve to regulate the flow of the second gas channel, to guarantee the security of ignition and to control the gas flow.

### DESCRIPTION OF THE DRAWINGS

Figure 1 is a cross-sectional view of a differential pressure regulating valve shown in the closed condition.
Figure 2 is a cross-sectional view of the differential pressure valve of figure 1, showing the valve rocker connected to the membrane displaced to be lifted.
Figure 3 is a cross-sectional view of the differential pressure valve of figure 1, showing the main plug component open.
Figure 4 is a cross-sectional view of the differential pressure valve of figure 1 with the additional plug component displaced to be lifted.
Figure 5 is a cross-sectional view of the retention valve in the differential pressure valve of figure 1.

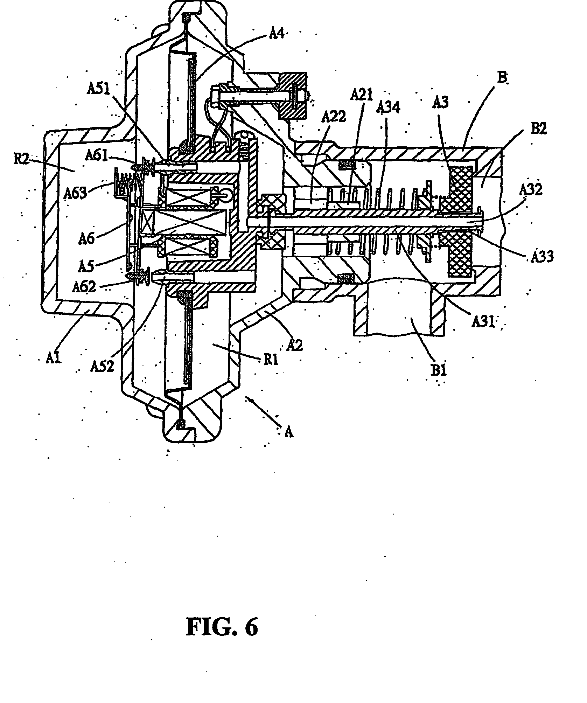

Figure 6 is a cross-sectional view of the differential pressure valve of the state of the art, shown closed.

### DETAILED DESCRIPTION OF THE INVENTION

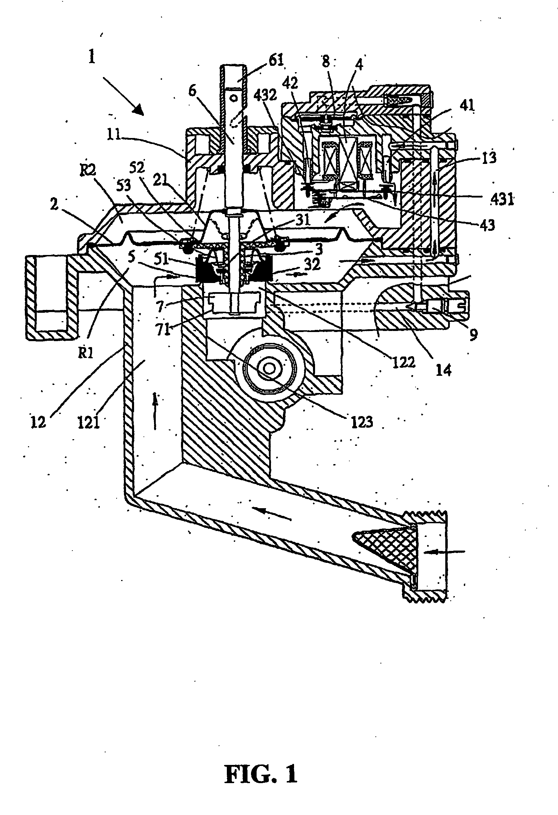

With reference to figure 1, the valve body 1 comprises an upper part 11, a lower part 12, a membrane 2 that divides the interior of the valve body 1 into a first or main pressure chamber R1 and a second or control pressure chamber R2, a valve rocker 3 connected to the membrane 2, and a magnetic valve 4 that controls the pressure difference between the main pressure chamber R1 and the control pressure chamber R2, so that the membrane 2 is able to drag the valve rocker 3. The magnetic valve 4 has an input 41, an output 42 and a magnet actuator 43 with a plug component actuating on both sides, a plug component 432 normally open, and a plug component 431 normally closed.

The main pressure chamber R1 in the lower body part 12 has a main gas output port 122 and a main gas input port 121, the gas output port 122 being opened and closed directly by means of a valve rocker 3, so that the gas flows only through the lower body part 12, thereby simplifying the construction, reducing the cost of machining and enhancing the hermetic seal.

The magnetic valve 4 is placed directly on one side of the upper body part 11. The input 41 and the output 42 of the magnetic valve are open-ended to the control pressure chamber R2 in the upper body part 11. Between the upper body part 11 and the lower body part 12 there is a first or pressuring gas channel 13 running from the main pressure chamber R1 to the input 41 of the magnetic valve 4, and a second or depressuring gas channel 14 running from the output 42 of the magnetic valve to the main gas output port 122. When the output 42 of the magnetic valve 4 is closed, the gas flows from the main gas input port 121 to the control pressure chamber R2 through the first gas channel 13 and the valve input 41, so that the membrane 2 is pushed towards the main pressure chamber R1, dragging the valve rocker 3 and thus blocking the main gas output port 122, so cutting-off the gas supply.

A main plug component 5 that is able to block the main gas output port 122 is fixed to the valve rocker 3, between the membrane 2 and the gas output port 122. The main plug component 5 has a central opening 51 for the motion of the valve rocker 3, which is fitted with a plug component 31 which can block the opening 51. For a gradual enlarging of the opening 51, the front end of the valve rocker 3 is cone-shaped 32. Between the main plug component 5 and the valve rocker 3 there is a housing 52 containing a spring 53. When the membrane 2 presses against the main pressure chamber R1, the main plug component 5 of the valve rocker 3 seals the gas output port 122 and the rocker plug component 31 blocks the opening 51, so cutting off the gas flow completely.

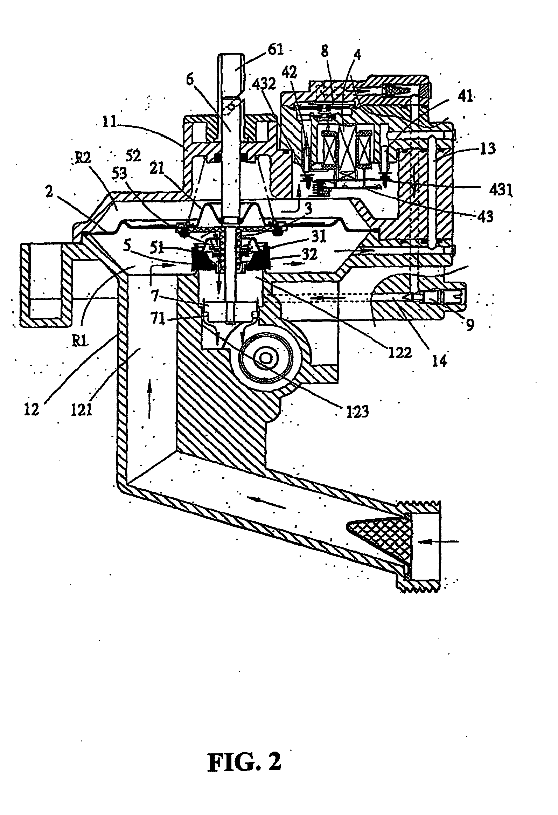

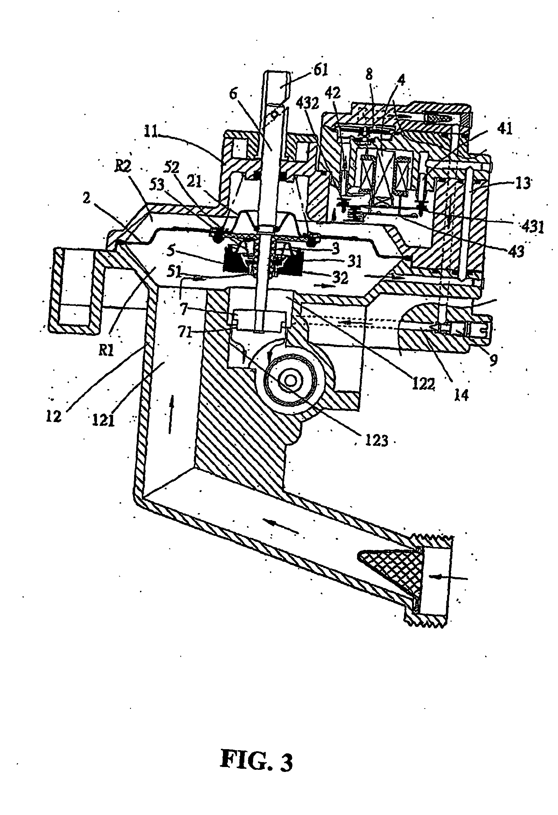

As shown in figure 2, the gas is unable to enter the control pressure chamber R2 when the output 42 of the magnetic valve 4 is opened, so closing the valve input 41. The gas flows in the control pressure chamber R2 to the gas output port 122 through the valve output 42 and the second gas channel 14, so that the membrane 2 is pushed towards the control pressure chamber R2. The membrane 2 drags the valve rocker 3 and moves it in relation to the main plug component 5 up to an intermediate lifting position, so that the rocker plug component 31 releases the main plug opening 51, enabling the gas to exit from the gas output port 122 through the play between the cone-shaped end 32 of the valve rocker 3 and the opening 51, for the burner ignition. As shown in figure 3, the main plug component 5 is dragged by the valve rocker 3 when the membrane 2 pushes fully towards the control pressure chamber R2, thus releasing the gas output port 122, so that the gas can exit through the gas output port 122 at a greater gas flow into the burner to keep it in operation.

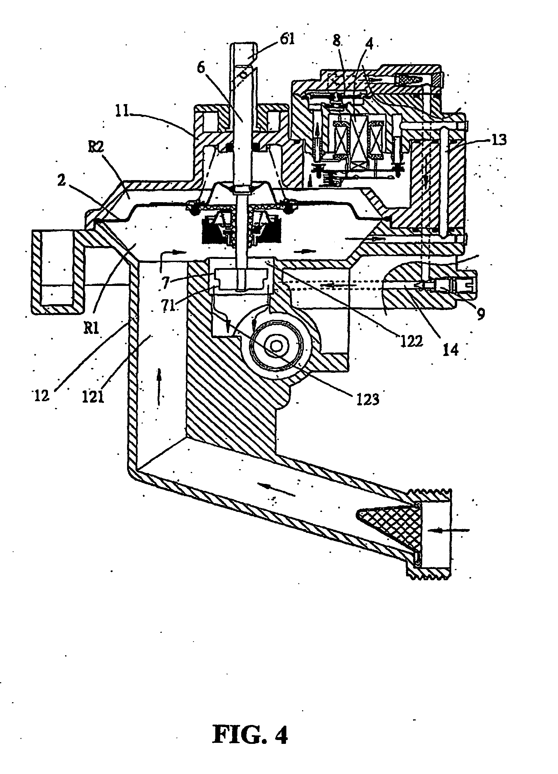

The gas output port 122 comprises a stepping 123. Through the valve rocker 3, a gas flow regulation rod 6 crosses an area of deformation 21 in the centre of the membrane 2 and said gas flow regulation rod 6 is fitted, at its front end, with an additional plug component 7 provided with a peripheral stepping 71, which can be introduced into a stepping 123 in the main output port 122. The rear end of the gas flow regulation rod 6 emerges from the upper part 11 and is connected to a rotary button 61 by means of which it is possible to adjust the depth of the additional plug component 7 in the stepping 123. When the main plug component 5 is fully open, the gas flow can be regulated by means of the combined action of the stepping 71 in the additional plug component 7 and the stepping 123 of the gas output port 122. In figure 3 the gas flow is less, while the gas flow in figure 4 is greater because the additional plug component 7 withdraws completely from the area of the stepping 123 of the gas output port 122.

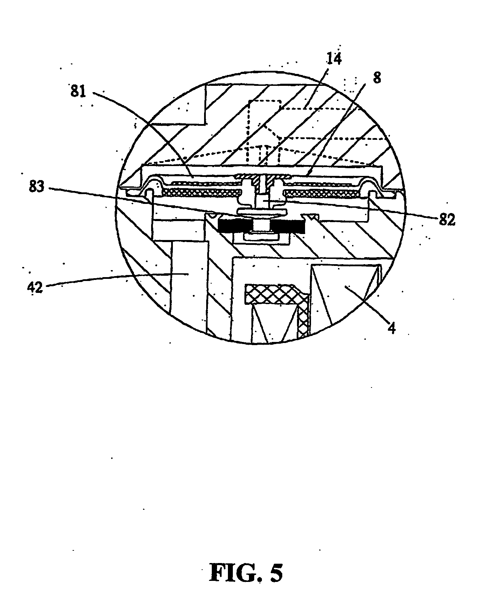

Between the output 42 of the magnetic valve 4 and the second gas channel 14, a retention valve 8 is placed to reduce the variation in the pressure of the control pressure chamber R2. As shown in figure 5, the retention valve 8 comprises a membrane 81 provided with a central crossing opening 82, and in the casing of the magnetic valve 4 there is fixed on the same side of the membrane 81, a plug component 83 for closing the membrane opening 82. When the gas pressure in the output port 122 is greater than the actual in the control pressure chamber R2, the membrane 81 is pushed against the plug component 83 and the opening 82 is sealed, preventing the gas from returning to the control pressure chamber R2, so avoiding an unwanted blockage of the gas output port 122. As seen in figure 2, there is a needle valve 9 in the second gas channel 14 for making it possible to regulate the flow of the second gas channel 14, to guarantee the security of the ignition and control the flow of the gas.

## Claims

1. A differential pressure regulating valve that comprises a valve body (1), said valve body (1) comprising an upper part (11), a lower part (12), a membrane (2) dividing the interior of the valve body into a main pressure chamber (R1) and a control pressure chamber (R2), a valve rocker (3) provided with at least a main plug component (5) and connected to the membrane (2) for regulating a main gas flow supply, a regulating rod 86) axially movable in cooperation with the valve rocker (3), and a magnetic valve (4) which controls the pressure difference between the first pressure chamber (R1) and the second pressure chamber (R2), so that the membrane (2) is able to drag the valve rocker (3), the first pressure chamber (R1) in the body lower part (12) communicating with a main gas output port (122) and a main gas input port (121), the gas output port (122) opening and closing directed through the valve rocker (3) so that the main gas flows only through the body lower part (12), and the magnetic valve (4) being placed on the body upper part (11) for pressuring and depressuring the control pressure chamber (R2), comprises a valve input (41), a valve output (42) and a magnet (43) having a plug component (431) normally closed and a plug component (432) normally open, respectively actuating on said valve input (41) and output (42) in the control pressure chamber (R2), the body upper part (11) and lower part (12) including an entrance gas channel (13) running from the main pressure chamber (R1) to the valve input (41), and an exhaust gas channel (14) from the valve output (42) to the main gas output port (121), so that the membrane (2) is pushed in one or the other direction dragging the valve rocker (3) and so cutting off or opening the gas supply, **characterised in that** between the output (42) of the magnetic valve (4) and the second gas channel (14) there is a retention valve (8) to reduce the variation in pressure in the control pressure chamber (R2) for preventing the latter from gas returning from the main output port (122).

2. The differential pressure regulating valve according claim 1, **characterised in that** the retention valve (8) comprises a membrane (81) which has an opening (82) in the centre, and there is a plug component (83) fixed on the casing of the magnetic valve (4) for said opening (82), wherein when the gas pressure in the gas output port (122) is greater than that of the control pressure chamber (R2), the membrane (81) is pushed against the plug component (83) so that the opening (82) is blocked, thus preventing the gas from returning to the control pressure chamber (R2) and avoiding an unwanted blockage of the gas output port (122).

3. The differential pressure regulating valve according to claim 1, **characterised in that** the gas output port (122) comprises a stepping (123) and a gas flow regulation rod (6) extends along the valve rocker (3) and passes through an area of deformation (21) in the centre of the membrane (2), the front end of the gas flow regulation rod (6) having a needle plug component (7) which can be introduced into the stepping (123) and which, on its perimeter, has a stepping (71), while the rear end (61) of the gas flow regulation rod (6) emerges from the upper part (11) and is linked to a rotary button (61) by means of which it is possible to adjust the depth of the needle plug component (7) in the area of the stepping (123) of the gas output port (122), enabling the gas flow to be regulated thanks to the combined action of the stepping (71) on the needle plug component (7) and the stepping (123) of the output port (122).

4. The differential pressure regulating valve according to claim 1, **characterised in that** on the valve rocker (3), between the membrane (2) and the gas output port (122), a main plug component (5) is fixed which is able to seal the gas output port (122), the main plug component (5) having an opening (51) for the valve rocker (3) in the centre, the front end fitted with a plug component (31) which can close the opening (51), and for which the valve rocker (3) is cone-shaped (32) at its front end, and there is, between the main plug component (5) and the valve rocker (3), a housing (52) in which a spring (53) is placed.

## Patentansprüche

1. Ein Ventil zur Differenzialdruckregulierung umfassend einen Ventilkörper (1), wobei der Ventilkörper (1) einen oberen Teil (11), einen unteren Teil (12), eine Membrane (2), die das Innere des Ventilkörpers in eine Hauptdruckkammer (R1) und eine Kontrolldruckkammer (R2) unterteilt, einen Ventilhebel (3) versehen mit mindestens einem Hauptanschlusselement (5), der zur Regulierung einer Hauptgasflussversorgung an die Membrane (2) angeschlossen ist, einen zusammen mit dem Ventilhebel (3) axial beweglichen Feinregelstab (6) und ein Magnetventil (4), das den Druckunterschied zwischen der ersten Druckkammer (R1) und der zweiten Druckkammer (R2) kontrolliert, umfasst, so dass die Membrane (2) in der Lage ist, den Ventilhebel (3) zu ziehen, sodass die erste Druckkammer (R1) im unteren Teil des Körpers (12) mit einem Hauptgasauslasskanal (122) und einem Hauptgaseingangskanal (121) in Verbindung steht, der Gasauslasskanal (122) gesteuert durch den Ventilhebel (3) öffnet bzw. schließt, so dass das Hauptgas durch den unteren Teil des Körpers (12) strömt und das Magnetventil (4) in den oberen Teil des Körpers (11) gesetzt wird, um die Kontrolldruckkammer (R2) unter Druck zu setzen bzw. drucklos zu setzen, umfassend einen Ventileingang (41), einen Ventilausgang (42) und einen Magnet (43) mit einem normalerweise geschlossenen Anschlusselement (431) und einem normalerweise geöffneten Anschlusselement (432), die jeweils auf den Ventileingang (41) bzw. -ausgang (42) in der Kontrolldruckkammer (R2), den oberen Teil des Körpers (11) und den unteren Teil (12) einwirken, inklusive eines Gaseinlasskanals (13), der von der Hauptdruckkammer (R1) zum Ventileingang (41) und eines Gasablasskanals (14), der vom Ventilausgang (42) zum Hauptgasauslasskanal (121) führen, so dass die Membrane (2) in die eine oder andere Richtung gedrückt wird und dabei den Ventilhebel (3) verschiebt und so die Gasversorgung unterbricht bzw. öffnet, **gekennzeichnet dadurch, dass** zwischen dem Ausgang (42) des Magnetventils (4) und dem zweiten Gaskanal (14) ein Rückschlagventil (8) liegt, das die Druckänderung in der Kontrolldruckkammer (R2) verringert, um zu verhindern, dass das Gas von dort zum Hauptgasauslasskanal (122) zurückströmt.

2. Das Ventil mit Differenzialdruckregulierung nach Anspruch 1, **gekennzeichnet dadurch, dass** das Rückschlagventil (8) eine Membrane (81) umfasst, die mit einer Öffnung (82) in der Mitte versehen ist, und ein Anschlusselement (83) am Gehäuse des Magnetventils (4) für diese Öffnung (82) vorhanden ist, wobei, wenn der Gasdruck im Gasauslasskanal (122) höher ist als der in der Kontrolldruckkammer (R2), die Membrane (81) gegen das Anschlusselement (83) gedrückt wird, so dass die Öffnung (82) verriegelt und somit verhindert wird, dass das Gas in die Kontrolldruckkammer (R2) zurückströmen kann und eine ungewollte Verriegelung des Gasauslasskanals (122) vermieden wird.

3. Das Ventil mit Differenzialdruckregulierung nach Anspruch 1, **dadurch gekennzeichnet, dass** der Gasauslasskanal (122) eine Abstufung (123) umfasst und sich eine Gasflussregelstab (6) entlang des Ventilhebels (3) erstreckt und durch einen Verformungsbereich (21) in der Mitte der Membrane (2) verläuft, wobei das vordere Ende des Gasflussregelstabs (6) mit einem Anschlusselement mit Nadel (7) versehen ist, das in die Abstufung (123) eingeführt werden kann und auf seinem Umfang eine Abstufung (71) besitzt, während das hintere Ende (61) des Gasflussregelstabs (6) aus dem oberen Teil (11) heraussteht und mit einem Drehknopf (61) verbunden ist, über den es möglich ist, die Tiefe des Anschlusselements mit Nadel (7) im Bereich der Abstufung (123) des Gasauslasskanals (122) einzustellen, so dass es möglich ist, den Gasfluss dank der kombinierten Wirkung der Abstufung (71) auf dem Anschlusselement mit Nadel (7) und der Abstufung (123) des Auslasskanals (122) zu regeln.

4. Das Ventil mit Differenzialdruckregulierung nach Anspruch 1, **dadurch gekennzeichnet, dass** auf dem ventilhebel (3) zwischen der Membrane (2) und dem Gasauslasskanal (122) ein Hauptanschlusselement (5) montiert ist, das in der Lage ist, den Gasauslasskanal (122) zu versiegeln, wobei das Hauptanschlusselement (5) in der Mitte mit einer Öffnung (51) für den Ventilhebel (3), das vordere Ende mit einem Anschlusselement (31), das die Öffnung (51) schließen kann, versehen ist, wozu der Ventilhebel (3) an seinem vorderen Ende kegelförmig (32) ist und zwischen dem Hauptanschlusselement (5) und dem Ventilhebel (3) ein Gehäuse (52) vorhanden ist, in dem eine Feder (53) eingesetzt ist.

## Revendications

1. Un régulateur de pression différentielle qui comprend un corps de vanne (1), ledit corps de vanne (1) comprenant une partie supérieure (11), une partie inférieure (12), une membrane (2) qui divise l'espace interne du corps de vanne en une chambre de pression principale (R1) et une chambre de pression de contrôle (R2), un culbuteur (3) fourni avec au moins un bouchon mâle (5) et connecté à la membrane (2) pour réguler une alimentation de gaz principale, une barre de réglage (86) à déplacement axial de concert avec le culbuteur (3) et une électrovanne (4) qui contrôle la pression entre la première chambre de pression (R1) et la seconde chambre de pression (R2), de manière à ce que la membrane (2) soit capable de faire glisser le culbuteur (3), la première chambre de pression (R1) dans la partie inférieure (12) du corps communicant avec un orifice principal d'admission du gaz (122) et un orifice principal d'évacuation du gaz (121), l'ouverture et la fermeture de l'orifice d'évacuation étant effectuées au moyen du culbuteur (3) de manière à ce que le gaz principal s'écoule uniquement dans la partie inférieure (12) du corps et l'électrovanne placée sur la partie supérieure (11) pour la pressurisation et la dépressurisation de la chambre de pression de contrôle (R2), comprend une entrée de vanne (41), une sortie de vanne (42) et un aimant (43) doté d'un bouchon mâle (431) habituellement fermé et d'un bouchon mâle (432) habituellement ouvert, actionnant respectivement lesdites entrée (41) et sortie (42) de vanne de la chambre de pression de contrôle (R2), la partie supérieure (11) et inférieure (12) du corps comprenant un canal d'admission du gaz (13) reliant la chambre de pression principale (R1) à l'entrée de la vanne (41) et un canal d'évacuation du gaz (14) reliant la sortie de la vanne (42) à l'orifice principal d'évacuation du gaz (121), de telle manière que la membrane (2) est poussée dans une direction ou dans une autre entraînant avec elle le culbuteur (3) et coupant ou ouvrant de cette manière, l'alimentation de gaz, **caractérisé en ce qu'**entre la sortie (42) de l'électrovanne (4) et le canal de gaz (14) se trouve une soupape de retenue (8) qui réduit la variation de la pression dans la chambre de pression de contrôle (R2) pour protéger cette dernière contre les retours de gaz de l'orifice principal d'évacuation (122).

2. Le régulateur de pression différentielle selon la revendication 1, **caractérisé en ce que** la soupape de retenue (8) comprend une membrane (81) dotée d'une ouverture (82) en son centre, et un bouchon mâle (83) est fixé sur le boîtier de l'électrovanne (4) pour ladite ouverture (82) où, lorsque la pression du gaz au niveau de l'orifice d'évacuation du gaz (122) est supérieure à celle de la chambre de pression de contrôle (R2), la membrane (81) est poussée contre le bouchon mâle (83) de manière à ce que l'ouverture (82) soit bloquée, empêchant ainsi un retour de gaz vers la chambre de pression de contrôle (R2) et évitant dans le même temps un blocage indésirable de l'orifice d'évacuation du gaz (122).

3. Le régulateur de pression différentielle selon la revendication 1, **caractérisé en ce que** l'orifice d'évacuation du gaz (122) comprend un étagement (123) et une barre de réglage de l'écoulement de gaz (6) s'étend le long du culbuteur (3) et traverse une zone de déformation (21) au centre de la membrane (2), l'extrémité avant de la barre de réglage de l'écoulement du gaz (6) étant dotée d'un bouchon à pointe (7) qui peut être introduit dans l'étagement (123) et qui, sur son périmètre, dispose d'un étagement (71), alors que l'extrémité arrière (61) de la barre de réglage de l'écoulement du gaz (6) émerge au niveau de la partie supérieure (11) et est reliée à un bouton rotatif (61) au moyen duquel il est possible d'ajuster la profondeur du bouchon à pointe (7) dans la zone de l'étagement (123) de l'orifice d'évacuation du gaz (122), ce qui permet de réguler l'écoulement du gaz sous l'effet combiné de l'étagement (71) placé sur le bouton à pointe (7) et de l'étagement (123) placé sur l'orifice d'évacuation du gaz (122).

4. Le régulateur de pression différentielle selon la revendication 1, **caractérisé en ce que** l'on fixe sur le culbuteur (3), entre la membrane (2) et l'orifice d'évacuation du gaz (122), un bouchon mâle principal (5) capable de boucher l'orifice d'évacuation du gaz (122), le bouchon mâle principal (5) étant doté en son centre, d'une ouverture (51) pour le culbuteur (3), l'extrémité avant fixée sur un bouchon mâle (31) capable d'obturer l'ouverture (51) et pour lequel l'extrémité avant du culbuteur (3) est en forme de cône (32) et il y a entre le bouchon mâle principal (5) et le culbuteur (3), un boîtier (52) dans lequel un ressort (53) a été placé.
